# FASCICULE DE BREVET EUROPEEN

(11) **EP 3 096 053 B1**
(45) Date de publication et mention de la délivrance du brevet: **10.06.2020**
(21) Numéro de dépôt: 16169668.7
(22) Date de dépôt: 13.05.2016
(51) Int. Cl.: F16K 31/06

(54) **VANNE ELECTROMAGNETIQUE CRYOGENIQUE AUTOCLAVE POUR LANCEUR SPATIAL**
KRYOGENES ELEKTROMAGNETISCHES AUTOKLAVENVENTIL FÜR TRÄGERRAKETE
AUTOCLAVE CRYOGENIC ELECTROMAGNETIC VALVE FOR SPACE LAUNCHER

(30) Priorité: 19.05.2015 BE 201505306
(43) Date de publication de la demande: 23.11.2016
(73) Titulaire: Safran Aero Boosters SA, 4041 Herstal (BE)
(72) Inventeur: DELILE, Antoine, 5380 Pontillas (BE); SIMÉON, Bernard, 4031 Angleur (BE); FRIPPIAT, Cédric, 4910 Jehanster (BE); DELLIS, Olivier, 4000 Liège (BE)
(74) Mandataire: Lecomte & Partners

(56) Documents cités:
- EP-A2- 0 127 875
- WO-A1-92/21904
- DE-U1- 8 408 052
- FR-A1- 2 320 485
- FR-A1- 2 487 942
- US-A- 3 371 684

## Description

### Domaine technique

L'invention concerne le domaine des vannes électromagnétiques. Plus précisément, l'invention traite d'une vanne électromagnétique à billes pour une alimentation en fluide cryogénique, tel de l'ergol, d'un aéronef spatial.

### Technique antérieure

Une fusée est propulsée à l'aide de carburant et de comburant. Le carburant est généralement de l'ergol qui est contenu dans des réservoirs puis distribué dans des conditions cryogéniques. Pour alimenter avec précision les propulseurs, des électrovannes sont associées aux réservoirs. Elles présentent généralement des actionneurs électromagnétiques utilisant le courant du réseau électrique de la fusée ; les actionneurs devant s'adapter à l'intensité disponible sur le réseau.

Pour maintenir ouverte une vanne électromagnétique, il est nécessaire d'alimenter en continu sa bobine. Cependant, le courant qui y circule a pour effet de chauffer la vanne, dans certains cas jusqu'à 100°C ce qui risque d'enflammer le carburant.

Le carburant est de l'ergol circulant sous forme gazeuse et à une température atteignant les -200°C, et une pression de l'ordre de 400 bars. Cette pression exerce des efforts destructifs sur les éléments d'étanchéité, tout comme les vibrations mécaniques d'une fusée lors de son décollage. Ces vibrations peuvent se traduire par des accélérations de 60g qui précipitent l'usure des surfaces d'étanchéité, de concert avec les chocs des mouvements de fermetures.

Le document FR 2 487 942 A1 divulgue une vanne avec un niveau de distribution et un niveau de pilotage du niveau de distribution. Le niveau de distribution comprend deux billes coopérant avec deux sièges opposés. Un axe disposé entre ces billes permet de les ouvrir et de les fermer sélectivement, un piston à soufflet permet d'actionner l'une de ces billes. Le piston est commandé par le niveau de pilotage qui comporte deux billes également reliées par un axe et maintenues en position fermée par un ressort. Un actionneur électromagnétique avec un plongeur à poussoir pousse l'une des billes, qui pousse elle-même l'autre bille via l'axe.

Or cette configuration est encombrante. De plus, la bille coopérant avec le plongeur billes est soumise à des efforts importants qui dégradent son siège si bien que l'étanchéité diminue à l'usage. En effet, le mouvement de fermeture implique que le siège absorbe l'énergie cinétique du plongeur de la vanne électromagnétique. En parallèle le poussoir du plongeur s'écrouit progressivement à force d'écraser la bille contre son siège. Dès lors, il n'est plus à même d'assurer le bon centrage et le bon plaquage de la bille vers son siège si bien que l'étanchéité est à nouveau pénalisée. Il est donc intéressant de proposer une vanne avec une bille poussée de son siège depuis l'orifice correspondant.

Le document US 3 371 684 A divulgue un dispositif de commande de valve pneumatique. La valve présente un orifice d'admission connecté sélectivement à deux orifices d'échappement. Ces orifices échappement sont séparés par un piston mobile qui est actionné par la pression du fluide provenant de l'orifice d'admission. L'ouverture et la fermeture d'un échappement à l'aide d'un joint permet d'actionner le piston mobile. Les échappements sont fermés tour à tour grâce à un dispositif de commande. Celui-ci comporte des sièges opposés et des obturateurs assurant les fonctions des joints. Par ailleurs, ces obturateurs sont déplacés par un plongeur disposés entre eux grâce à une bobine électromagnétique.

Le document FR 2 320 485 A divulgue une vanne de commande électromagnétique comportant deux sièges tournés à l'opposé l'un de l'autre ; deux obturateurs coopérant chacun avec un des sièges de sorte à pouvoir obturer et ouvrir ledit siège, un circuit magnétique avec un plongeur magnétique le plongeur déplaçant les obturateurs par rapport à leur siège respectif. Le plongeur est placé entre les obturateurs de sorte à ce que chaque obturateur ferme son siège en éloignant le plongeur dudit siège, et un passage reliant les sièges et des poussoirs coopérant avec les obturateurs,

### Résumé de l'invention

### Problème technique

L'invention a pour objectif de résoudre au moins un des problèmes posés par l'art antérieur. Plus précisément, l'invention a pour objectif d'augmenter la longévité d'une vanne électromagnétique à billes. L'invention a également pour objectif d'améliorer la compacité d'une vanne électromagnétique.

### Solution technique

L'invention a pour objet une vanne électromagnétique, notamment pour fluide cryogénique, la vanne comprenant : deux sièges tournés à l'opposé l'un de l'autre; deux obturateurs qui coopèrent chacun avec un des sièges de sorte à pouvoir obturer et ouvrir ledit siège ; un circuit magnétique avec un plongeur magnétique apte à être entraîné par une source de champ magnétique, le plongeur déplaçant les obturateurs par rapport à leur siège respectif ; le plongeur étant placé entre les obturateurs de sorte à ce que chaque obturateur ferme son siège en éloignant le plongeur dudit siège, la vanne comprenant en outre un passage reliant les sièges et des poussoirs coopérant avec les obturateurs, chaque poussoir étant apte à déplacer l'un des obturateurs en traversant le siège associé, vanne dans laquelle au moins un ou chaque poussoir est monté mobile par rapport au plongeur de sorte à être rétractable dans le plongeur, le plongeur comprenant préférentiellement au moins un ou deux ressorts configurés pour déployer les poussoirs hors du plongeur.

Selon un mode avantageux de l'invention, au moins un ou chaque poussoir comprend une portion de moindre épaisseur coopérant avec l'un des obturateurs.

Selon un mode avantageux de l'invention, le plongeur comprend un canal traversant configuré pour relier les sièges du passage.

Selon un mode avantageux de l'invention, la vanne comprend au moins un guide poussoir, préférentiellement deux guide poussoir disposés de part et d'autre du plongeur.

Selon un mode avantageux de l'invention, au moins un ou chaque siège est formé sur un guide poussoir, au moins un ou chaque guide poussoir est réalisé en matériau amagnétique.

Selon un mode avantageux de l'invention, la vanne comprend au moins un ou deux porte-obturateurs, chaque porte-obturateur étant configuré pour centrer son obturateur par rapport au siège associé pendant les mouvements d'ouvertures et de fermetures des obturateurs.

Selon un mode avantageux de l'invention, la vanne comprend une source de champ magnétique, notamment une bobine, l'un des sièges étant disposé à l'intérieur de la source magnétique, le passage traversant éventuellement ladite source magnétique.

Selon un mode avantageux de l'invention, la vanne comprend un ressort pour plongeur maintenant le plongeur dans une configuration fermée où l'un des deux obturateurs, dit obturateur d'entrée, est fermé ; et où l'autre des deux obturateurs, dit obturateur échappement, est ouvert.

Selon un mode avantageux de l'invention, la vanne comprend au moins un ressort pour obturateur, préférentiellement deux ressorts pour obturateurs configurés pour maintenir chaque obturateur associé dans une position fermée contre le siège associé.

Selon un mode avantageux de l'invention, le passage comprend un côté avec une entrée et une sortie, le plongeur comprend une face configurée pour permettre une communication entre l'entrée et la sortie lorsque le plongeur est plaqué vers ou contre le côté entrée sortie.

Selon un mode avantageux de l'invention, le passage comprend une ouverture, notamment une troisième ouverture, qui est à distance des sièges reliés par le passage.

Selon un mode avantageux de l'invention, au moins un ou chaque obturateur est une bille, préférentiellement de diamètre inférieur à 4,00 mm, plus préférentiellement inférieur à 2,00 mm.

Selon un mode avantageux de l'invention, le passage est un passage de pilotage, et en ce que la vanne comprend en outre un niveau de distribution de fluide en communication avec le passage de pilotage, le niveau de distribution comprenant un passage de distribution, une entrée de distribution avec un siège, une sortie de distribution avec un siège, deux clapets ouvrant et fermant sélectivement le siège d'entrée de distribution et le siège de sortie de distribution.

Selon un mode avantageux de l'invention, les clapets de distribution sont commandés par un piston de distribution en communication avec le passage de pilotage.

Selon un mode avantageux de l'invention, la face du plongeur comprend un dégagement configuré pour permettre une communication entre l' entrée et la sortie lorsque le plongeur est plaqué vers ou contre le côté entrée sortie.

Selon un mode avantageux de l'invention, le plongeur est placé entre les obturateurs de sorte que chaque obturateur ouvre son siège en rapprochant le plongeur dudit siège.

Selon un mode avantageux de l'invention, les sièges sont fixes.

Selon un mode avantageux de l'invention, la vanne est une vanne à trois voies.

Selon un mode avantageux de l'invention, chaque obturateur est apte à clore la circulation via le passage

Selon un mode avantageux de l'invention, dans chaque position le plongeur reste en contact des obturateurs.

Selon un mode avantageux de l'invention, l'espace entre les obturateurs est constant, ou l'espace entre les obturateurs est plus grand en position fermée qu'en position ouverte.

Selon un mode avantageux de l'invention, l'ouverture ou la troisième ouverture est une voie alimentation.

Selon un mode avantageux de l'invention, au moins un ou chaque poussoir est réalisé en matériau amagnétique.

Selon un mode avantageux de l'invention, au moins un ou chaque obturateur est réalisé en matériau amagnétique.

Selon un mode avantageux de l'invention, la course du plongeur et/ou de chaque poussoir par rapport aux sièges est inférieure à 5,00 mm, préférentiellement inférieure à 2,00 mm, plus préférentiellement inférieure à 1,00 mm, éventuellement inférieure à 0,50 mm ou 0,20 mm.

Selon un mode avantageux de l'invention, le piston de distribution est relié au passage de pilotage via le siège utilisateur du passage de pilotage.

Selon un mode avantageux de l'invention, l'entrée du passage de pilotage communique avec l'entrée de distribution indépendamment de l'ouverture ou de la fermeture de la vanne.

### Avantages apportés

La présente vanne présente un fonctionnement plus durable. Le niveau de pilotage conserve son étanchéité malgré la répétition des actionnements. Les surfaces assurant des étanchéités sont exposées à des efforts moindres, que ce soit lors de l'ouverture ou de la fermeture. L'invention propose en outre une solution découplant le plongeur des obturateurs, ce qui autorise d'exploiter l'inertie du plongeur sans créer de choc direct sur les obturateurs. Ces bénéfices sont conservés malgré des temps de réponses courts et une pression autoclave élevée, par exemple atteignant 400 bars.

### Brève description des dessins

La figure 1 représente une vanne électromagnétique en position fermée selon l'invention.
La figure 2 représente une vanne électromagnétique en position ouverte selon l'invention.
La figure 3 représente un agrandissement du niveau distribution en position fermée selon l'invention.
La figure 4 représente un agrandissement du niveau distribution en position ouverte selon l'invention.

### Description des modes de réalisation

Dans la description qui va suivre, les termes intérieur ou interne et extérieur ou externe renvoient à un positionnement par rapport à l'axe de déplacement du plongeur. La direction axiale correspond à la direction selon l'axe de déplacement du plongeur.

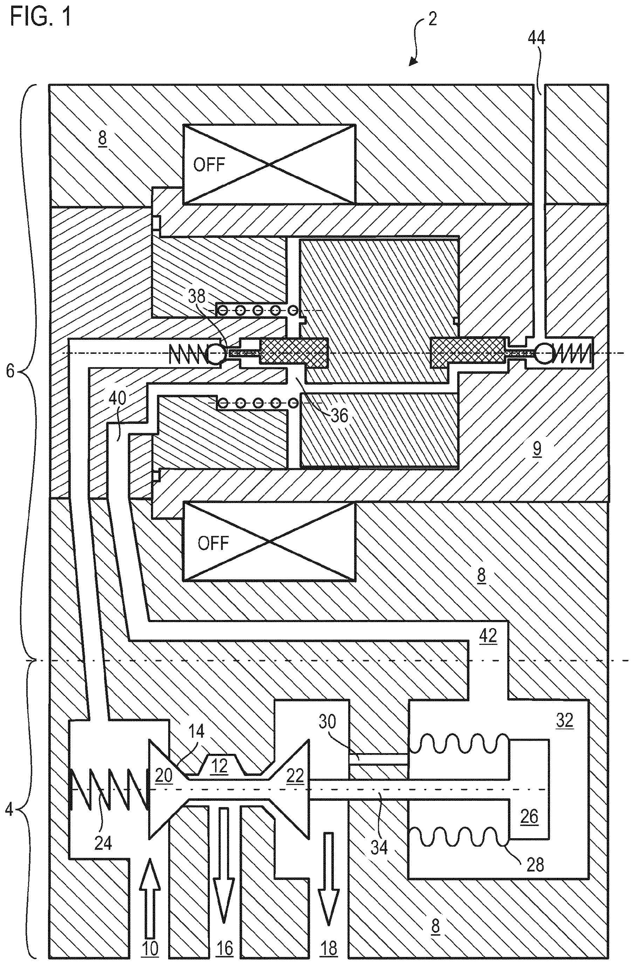

La figure 1 représente une vanne 2 à actionnement électrique, plus précisément à actionnement électromagnétique et mécanique. La vanne 2 permet de gérer un écoulement d'un fluide pressurisé, par exemple gazeux. La vanne 2 est ici représentée dans un état fermé, état qu'elle présente en l'absence d'alimentation électrique. Toutefois, la vanne pourrait être configurée de sorte à rester ouverte au repos, et à se fermer en cas d'alimentation.

La vanne 2 comprend un niveau de distribution 4 permettant la distribution du fluide, et un niveau de pilotage 6, ou niveau de commande 6, commandant le niveau de distribution 4. La vanne 2 peut comprendre un corps principal 8 ; éventuellement commun aux deux niveaux, ou alternativement réalisé en deux parties. Le niveau de pilotage 6 peut comprendre une carcasse ferromagnétique 9 permettant de former un circuit magnétique dans le niveau de pilotage 6. La carcasse peut former un bloc de matière avec une chambre interne. La vanne présente une entrée 10 commune au niveau de distribution 4 et au niveau de pilotage 6.

Le niveau de distribution 4 comprend un passage de distribution 12 reliant une entrée de distribution 14 avec un siège, et une sortie de distribution 16 ou port utilisateur. Optionnellement, le passage de distribution 12 comprend un échappement 18 éventuellement avec un siège, la sortie 16 étant entre l'entrée 14 et l'échappement 18. Le niveau de distribution 4 comprend en outre des clapets de distribution (20 ; 22) coopérant avec les sièges du niveau de distribution 4 de sorte à les obturer. Les clapets (20 ; 22) sont fixés l'un à l'autre, et sont maintenus en position fermée grâce à un ressort 24.

Les clapets de distribution (20 ; 22) sont commandés par un piston de distribution 26 qui est actionné grâce à la pression du fluide pressurisé de la vanne 2. Le piston 26 peut être un piston 26 à soufflet 28, ou être un piston inséré dans un alésage de diamètre correspondant. L'intérieur du soufflet 28 peut être en communication avec l'échappement 18 voisin à l'aide d'un orifice 30. Le piston 26 est logé dans une chambre 32 où les variations de pression le translatent ; translation qui est communiquée aux clapets (20 ; 22) via une tige 34. La pression dans la chambre 32 du piston est commandée par le niveau de pilotage 6. Le piston 26 assure un actionnement mécanique, pneumatique/hydraulique.

Le niveau de pilotage 6 comprend un passage de pilotage 36 reliant une entrée de pilotage 38 avec un siège, et au moins une sortie de pilotage 40 ou troisième ouverture 40. La sortie de pilotage 40 est en communication hydraulique avec le piston 26 du niveau de distribution 4 via un conduit 42. De la sorte, lorsque le niveau de pilotage 6 s'ouvre ; la pression en entrée 10 de la vanne 2 s'exerce sur le piston 26, et le déplace.

Optionnellement, le passage de pilotage 36 peut comprendre un échappement de pilotage 44 avec un siège, la sortie de pilotage 40 étant entre l'entrée de pilotage 38 et l'échappement de pilotage 44. L'échappement de pilotage 44 accélère la descente de pression sur le piston 26 lorsque le niveau de pilotage 6 est coupé.

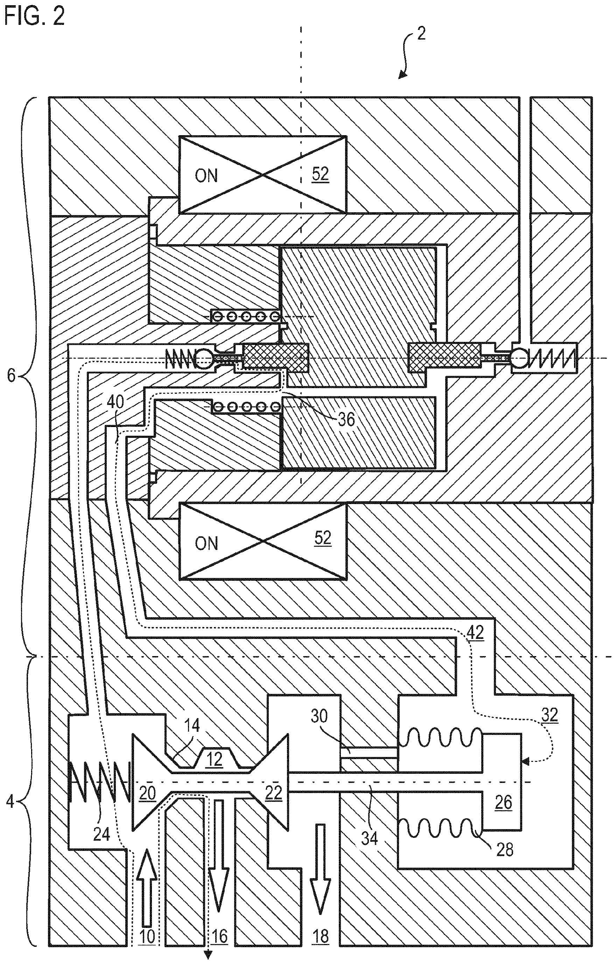

La figure 2 représente la vanne 2 en position ouverte. Le niveau de pilotage est ouvert et permet à la pression du fluide pressurisé d'agir dans et sur le niveau de distribution.

Le niveau de pilotage est ouvert. Il est traversé par le fluide. Un équilibre des pressions est atteint entre son entrée 38 et sa sortie 40 via son passage de pilotage 36. Le conduit 42 communique cette pression au piston 26 qui décale les clapets (20 ; 22). Ceux-là occupent alors une position ouverte, où le clapet d'entrée 20 ouvre son siège tandis que le clapet d'échappement 22 ferme le sien. L'entrée de distribution 14 communique alors la sortie de distribution 16, éventuellement directement. La vanne 2 est ouverte.

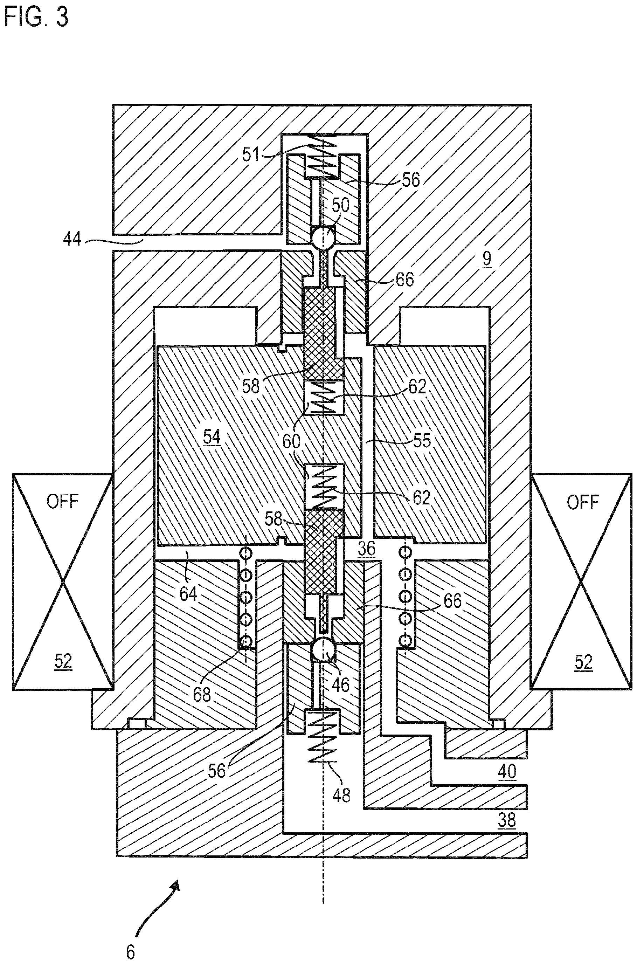

La figure 3 représente un agrandissement du niveau de pilotage 6 en position fermée, au repos, lorsque la vanne n'est pas alimentée électriquement. Le niveau de commande n'est pas représenté. L'état fermé du niveau de pilotage 6 peut être obtenu en obturant son entrée 38 et/ou en obturant sa sortie 40.

L'entrée de pilotage 38 comprend un obturateur d'entrée 46, telle une bille d'entrée 46 permettant de la fermer. La bille 46 peut être disposée en amont du siège d'entrée de sorte que la pression du fluide la maintienne fermée, ce qui lui confère un caractère autoclave. Un ressort 48 peut participer à cet effet de fermeture. Le choix d'une bille 46 est avantageux car cet élément peut être produit avec des tolérances de sphéricité strictes; de l'ordre du micromètre ce qui limite les fuites. La bille 46 peut être impactée sur son siège afin de le déformer et que l'interface d'étanchéité soit plus ajustée.

L'échappement de pilotage 44 peut comprendre un obturateur d'échappement 50, telle une bille 50 du côté aval du siège pour l'obturer, pour que la pression puisse contribuer à ouvrir l'obturateur échappement. Il est remarquable que les deux sièges du niveau de pilotage 6 sont tournés à l'opposés l'un de l'autre. Les faces de siège recevant chacune un obturateur regardent vers l'opposé de là où est l'autre siège. Les obturateurs (46 ; 50) sont placés dans des chambres distinctes, éventuellement séparées par une autre chambe ; en l'occurrence le passage de pilotage 36. Dans l'état représenté, la bille d'échappement 50 est écartée de son siège de sorte que les deux faces du piston restent à la pression de l'échappement ; soit à un équilibre des pressions. Les billes (46 ; 50) peuvent être en matériau céramique pour en augmenter la dureté et limiter l'inertie. Leur diamètre peut être égal à 1,59 mm, le diamètre des orifices des sièges correspondant peut être égal à 1,12 mm. Ces dimensions limitent à la fois la masse, ainsi que les effets de la pression du fluide sur les billes qui s'opposent à l'ouverture. Un ressort d'échappement 51 agit sur l'obturateur échappement pour le maintenir fermé.

Le niveau de pilotage 6 comprend des moyens d'actionnement magnétique. Il peut comprendre une bobine 52, qui entoure éventuellement le passage de pilotage 36, et/ou le siège d'entrée de pilotage, et/ou l'obturateur d'entrée 46. La bobine 52 peut comprendre plusieurs unités, plusieurs solénoïdes, disposés axialement l'un à côté de l'autre, et/ou emmanchés l'un dans l'autre. La bobine 52 peut être disposée entre l'entrée 38 et la sortie 40 du niveau de pilotage 6. Le passage de pilotage 36 peut également être entouré par la carcasse magnétique 9 formant le circuit magnétique. Le passage 36 comprend une face sur laquelle débouchent l'entrée 38 et la sortie 40. De la sorte, elles sont plus proches l'une de l'autre et les pertes de charges sont limitées pour des réactions plus rapides. Toutefois, il est envisageable de placer la sortie du côté de l'échappement par rapport aux moyens magnétiques.

Le niveau de pilotage 6 comprend un plongeur magnétique 54 qui est disposé à l'intérieur de la bobine 52, où il est soumis au flux magnétique du circuit magnétique. Le plongeur magnétique est disposé entre les obturateurs (46 ; 50) de manière à pouvoir ouvrir chaque siège en se rapprochant dudit siège et en poussant l'obturateur correspondant. Le niveau de pilotage devient plus court axialement. En éloignant le plongeur du siège, l'obturateur referme ledit siège en s'en rapprochant. Chaque obturateur est poussé ou pousse vers le plongeur.

Le plongeur 54 peut former une face mobile du passage 36. Le plongeur 54 peut comprendre un matériau ferromagnétique de sorte à conduire des lignes de champ de flux magnétique. Le plongeur 54 est mobile, ses déplacements permettent d'ouvrir et de fermer le niveau de pilotage 6. Il peut présenter un passage 55 reliant l'entrée 38 à l'échappement 44. Ce passage est optionnel car les fuites contrôlées autour du plongeur 54 peuvent suffire à l'équilibre des pressions en fonction des pressions en jeu et du temps de réponse souhaité.

Au moins un ou chaque obturateur (46 ; 50) peut comprendre une bille, et éventuellement un porte bille 56 ou porte obturateur 56. Chaque porte bille 56 peut comprendre un orifice autoristant une circulation d'une face à l'autre. Toutefois la présence de cet orifice n'est pas indispensable car les fuites, éventuellement contrôlées, autour du porte bille 56 peuvent suffire à atteindre la pression actionnant le piston du niveau de distribution. Chaque porte bille 56 peut permettre de centrer sa bille (46 ; 50) et de former un intermédiaire avec le ressort associé (48 ; 51) .

Le niveau de pilotage 6 peut comprendre des poussoirs 58 entrainés par le plongeur 54. Ceux-ci coopèrent avec les obturateurs (46 ; 50). Les poussoirs 58 peuvent pousser les obturateurs (46 ; 50) à distance de leurs sièges respectifs de sorte à permettre une ouverture et une circulation de fluide via le passage 36. Chaque poussoir 58 peut également s'éloigner de son obturateur (46 ; 50) associé de manière à ce que ce dernier regagne son siège pour assurer une étanchéité.

Les poussoirs 58 peuvent être montés mobiles par rapport au plongeur 54. Le plongeur 54 peut comprendre des cavités 60 recevant des portions de poussoirs 58, et éventuellement des moyens élastiques tels des ressorts 62. Ainsi, les poussoirs 58 peuvent se rétracter et se déployer par rapport au plongeur 54. Pour chaque obturateur (46 ; 50), le ressort 62 de poussoir pousse dans le sens opposé des moyens élastiques d'obturateur (48 ; 51). Il est possible de créer une chaine mécanique, éventuellement continue, d'un obturateur (46 ; 50) à l'autre. Cette possibilité permet de supprimer les jeux entre les poussoirs 58 et les obturateurs (46 ; 50), et les chocs de contact.

Les moyens élastiques 62 des poussoirs 58 pour prendre le dessus sur les moyens élastiques (48 ; 51) des obturateurs (46 ; 50). Les moyens élastiques 62 de poussoirs 58 peuvent être plus raides que les moyens élastiques (48 ; 51) d'obturateurs (46 ; 50). L'inverse est possible, par exemple en d'agissant sur les précontraintes.

Le déplacement du plongeur 54 peut être découplé des poussoirs 58 et donc des obturateurs (46 ; 50). Le plongeur 54 peut présenter une course plus longue que le déplacement nécessaire à l'ouverture d'un obturateur (46 ; 50). De la sorte il devient possible de moduler, éventuellement d'augmenter, les entrefers 64 de part et d'autres du plongeur 54.

Le plongeur 54 peut comprendre des surfaces de butés, notamment axiales, coopérant avec les poussoirs 58. Les moyens élastiques 62 de poussoirs 58 peuvent être alors moins raides que les moyens élastiques (48 ; 51) d'obturateurs (46 ; 50). Cette disposition permet de déplacer les jeux mécaniques, de telle sorte qu'ils ne soient pas au niveau des obturateurs, mais entre le plongeur 54 et les poussoirs 58. Ainsi, les interfaces avec les obturateurs (46 ; 50) sont préservées dans le temps.

Au moins un ou chaque poussoir 58 peut être réalisé en un matériau amagnétique, par exemple pour éviter les court-circuits magnétiques. Ils peuvent comprendre des portions de moindres épaisseurs, telles des aiguilles traversant chaque siège. Un obturateur (46 ; 50) peut alors être actionné depuis la face opposée au siège.

Les sièges du niveau de pilotage peuvent être formés sur des pièces rapportées 66, éventuellement en matériaux amagnétiques. Elles peuvent également servir de guide poussoir 66. Au moins un ou chaque guide poussoir 66 peut comprendre une surface de guidage dans laquelle le poussoir 58 correspondant glisse. Un passage peut être formé entre chaque ou au moins un couple poussoir 58 - guide poussoir 66, par exemple sur le poussoir 58. Ce passage permet une circulation de fluide et/ou équilibrage des pressions.

Un ressort de pilotage 68 peut plaquer le plongeur 54 dans sa position fermée. Ce ressort 68 prend appui sur la face englobant l'entrée et la sortie. Il est traversé par le passage de pilotage 36.

Le poussoirs 58 sont introduits dans le plongeur 54. Toutefois, chaque interface poussoir peut être rapprochée de l'obturateur voisin. Par exemple, ces interfaces peuvent être à l'intérieur des guides poussoir. Le plongeur peut comprendre des portées introduites dans, et coulissant à l'intérieur des guides. Ces guides peuvent alors être des guide-plongeurs.

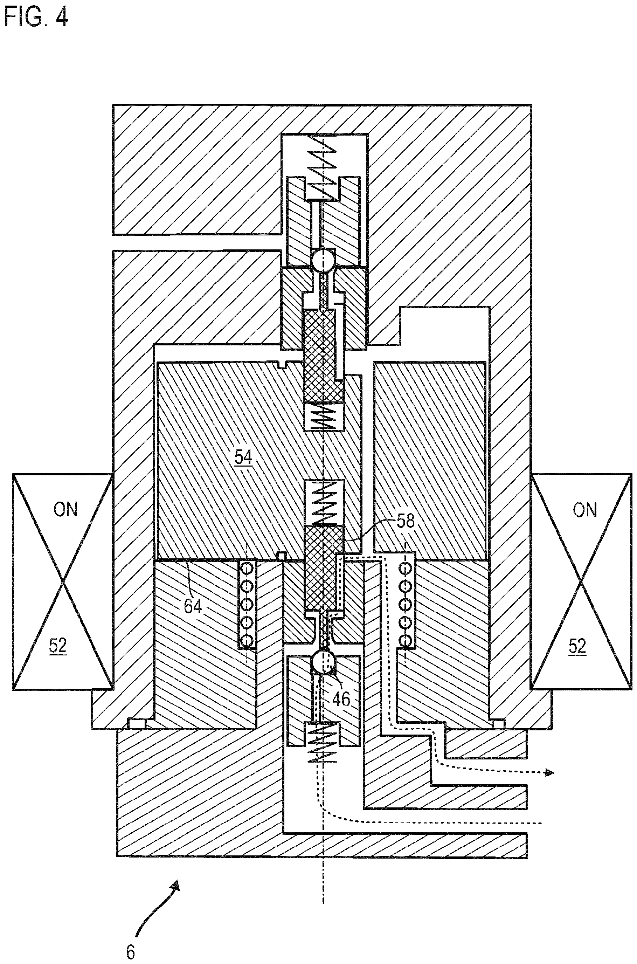

La figure 4 est une vue de la vanne en position ouverte. Les moyens d'actionnement 52 sont alimentés. Du courant circule dans les bobines 52.

Les moyens magnétiques 52 génèrent un flux magnétique dans le circuit magnétique de la carcasse, si bien qu'une force tend à refermer l'entrefer 64 en déplaçant le plongeur 54 vers l'obturateur d'entrée 46. Par l'intermédiaire du poussoir d'entrée 58, le plongeur pousse l'obturateur d'entrée 46 hors de son siège et ouvre le niveau de pilotage 6. L'ouverture peut être partielle. Elle permet une circulation ou un équilibre des pressions permettant d'actionner le niveau de distribution et de l'ouvrir tel que représenté en figure 2.

Les différents modes de réalisation présentés ci-dessus peuvent être combinés. Différents agencement entre l'entrée, la sortie, l'échappement sont envisagés. L'entrée et la sortie peuvent être sur deux faces opposées du passage, et/ou par rapport au plongeur. Le plongeur peut être inscrit dans le passage. Le niveau de pilotage est à trois voies, il pourrait être à deux voies ; tout comme la vanne.

## Revendications

1. Vanne électromagnétique (2), notamment pour fluide cryogénique, la vanne (2) comprenant :
- deux sièges tournés à l'opposé l'un de l'autre ;
- deux obturateurs (46 ; 50) qui coopèrent chacun avec un des sièges de sorte à pouvoir obturer et ouvrir ledit siège ;
- un circuit magnétique avec un plongeur magnétique (54) apte à être entraîné par une source de champ magnétique (52), le plongeur (54) déplaçant les obturateurs (46 ; 50) par rapport à leur siège respectif ;
le plongeur (54) étant placé entre les obturateurs (46 ; 50) de sorte à ce que chaque obturateur (46 ; 50) ferme son siège en éloignant le plongeur (54) dudit siège,
la vanne électromagnétique (2) comprenant en outre un passage (36) reliant les sièges et la vanne comprenant des poussoirs (58) coopérant avec les obturateurs (46 ; 50), chaque poussoir (58) étant apte à déplacer l'un des obturateurs (46 ; 50) en traversant le siège associé,
**caractérisée en ce qu'**au moins un ou chaque poussoir (58) est monté mobile par rapport au plongeur (54) de sorte à être rétractable dans le plongeur (54), le plongeur (54) comprenant préférentiellement au moins un ressort (62) configuré pour déployer les poussoirs (58) hors du plongeur (54).

2. Vanne électromagnétique (2) selon la revendication 1, **caractérisée en ce qu'**au moins un ou chaque poussoir (58) comprend une portion de moindre épaisseur coopérant avec l'un des obturateurs (46 ; 50).

3. Vanne électromagnétique (2) selon l'une des revendications 1 et 2, **caractérisée en ce que** le plongeur (54) comprend un canal traversant (55) configuré pour relier les sièges du passage (36).

4. Vanne électromagnétique (2) selon l'une des revendications 1 à 3, **caractérisée en ce qu'**elle comprend au moins un guide poussoir (66), préférentiellement deux guide poussoir (66) disposés de part et d'autre du plongeur (54).

5. Vanne électromagnétique (2) selon l'une des revendications 1 à 4, **caractérisée en ce qu'**au moins un ou chaque siège est formé sur un guide poussoir (66), au moins un ou chaque guide poussoir (66) est réalisé en matériau amagnétique.

6. Vanne électromagnétique (2) selon l'une des revendications 1 à 5, **caractérisée en ce qu'**elle comprend au moins un ou deux porte-obturateurs (56), chaque porte-obturateur (56) étant configuré pour centrer son obturateur (46 ; 50) par rapport au siège associé pendant les mouvements d'ouvertures et de fermetures des obturateurs (46 ; 50).

7. Vanne électromagnétique (2) selon l'une des revendications 1 à 6, **caractérisée en ce qu'**elle comprend une source de champ magnétique (52), notamment une bobine (52), l'un des sièges étant disposé à l'intérieur de la source magnétique (52), le passage traversant éventuellement ladite source magnétique (52).

8. Vanne électromagnétique (2) selon l'une des revendications 1 à 7, **caractérisée en ce qu'**elle comprend un ressort (68) pour plongeur maintenant le plongeur (54) dans une configuration fermée où l'un des deux obturateurs, dit obturateur d'entrée (46), est fermé ; et où l'autre des deux obturateurs, dit obturateur échappement (50), est ouvert.

9. Vanne électromagnétique (2) selon l'une des revendications 1 à 8, **caractérisée en ce qu'**elle comprend au moins un ressort pour obturateur (48 ; 51), préférentiellement deux ressorts pour obturateurs (48 ; 51) configurés pour maintenir chaque obturateur (46 ; 50) associé dans une position fermée contre le siège associé.

10. Vanne électromagnétique (2) selon l'une des revendications 1 à 9, **caractérisée en ce que** le passage (36) comprend une ouverture (40), notamment une troisième ouverture (40), qui est à distance des sièges reliés par le passage (36).

11. Vanne électromagnétique (2) selon l'une des revendications 1 à 10, **caractérisée en ce qu'**au moins un ou chaque obturateur (46 ; 50) est une bille (46 ; 50), préférentiellement de diamètre inférieur à 4,00 mm, plus préférentiellement inférieur à 2,00 mm.

12. Vanne électromagnétique (2) selon l'une des revendications 1 à 11, **caractérisée en ce que** le passage (36) est un passage de pilotage (36), et **en ce que** la vanne (2) comprend en outre un niveau de distribution (4) de fluide en communication avec le passage de pilotage (36), le niveau de distribution (4) comprenant un passage de distribution (12), une entrée de distribution (14) avec un siège, une sortie de distribution (16) avec un siège, deux clapets (20 ; 22) ouvrant et fermant sélectivement le siège d'entrée de distribution et le siège de sortie de distribution.

13. Vanne électromagnétique (2) selon la revendication 12, **caractérisée en ce que** les clapets de distribution (20 ; 22) sont commandés par un piston de distribution (26) en communication avec le passage de pilotage (36).

## Patentansprüche

1. Elektromagnetisches Ventil (2), insbesondere für kryogene Flüssigkeiten, wobei das Ventil (2) Folgendes umfasst:
- zwei voneinander abgewandte Aufnahmen;
- zwei Verschlüsse (46 ; 50), von denen jeder mit einer den Aufnahmen zusammenwirkt, so dass diese Aufnahme geschlossen und geöffnet werden kann;
- einen magnetischen Kreis mit einem magnetischen Kolben (54), der von einer Magnetfeldquelle (52) angetrieben werden kann, wobei der Kolben (54) die Verschlüsse relativ zu ihrer jeweiligen Aufnahme bewegt, wobei der Kolben (54) zwischen den Verschlüssen (46 ; 50) so angeordnet ist, dass jeder Verschluss (46 ; 50) seine Aufnahme schließt, indem der Kolben (54) von dieser Aufnahme wegbewegt wird,
wobei das elektromagnetische Ventil (2) ferner einen Durchgang (36) aufweist, der die Aufnahmen verbindet, und das Ventil Stößel (58) aufweist, die mit den Verschlüssen (46 ; 50) zusammenwirken, wobei jeder Stößel (58) in der Lage ist, einen der Verschlüsse (46 ; 50) zu verschieben, indem er durch die zugehörige Aufnahme hindurchgeht,
**dadurch gekennzeichnet, dass** mindestens ein oder jeder Stößel (58) relativ zu dem Kolben (54) beweglich angebracht ist, so dass er in den Kolben (54) eingezogen werden kann, wobei der Kolben (54) vorzugsweise mindestens eine Feder (62) umfasst, die so konzipiert ist, dass sie die Stößel (58) aus dem Kolben (54) ausfährt.

2. Elektromagnetisches Ventil (2) nach Anspruch 1, **dadurch gekennzeichnet, dass** mindestens ein oder jeder Stößel (58) einen Abschnitt geringerer Dicke aufweist, der mit einem der Verschlüsse (46 ; 50) zusammenwirkt;

3. Elektromagnetisches Ventil (2) nach einem der Ansprüche 1 und 2, **dadurch gekennzeichnet, dass** der Kolben (54) einen Durchgangskanal (55) aufweist, der dazu ausgelegt ist, die Aufnahmen des Durchgangs (36) zu verbinden.

4. Elektromagnetisches Ventil (2) nach einem der Ansprüche 1 bis 3, **dadurch gekennzeichnet, dass** er mindestens eine, vorzugsweise zwei Schubführung(en) (66) umfasst, die auf beiden Seiten des Kolbens (54) angeordnet sind.

5. Elektromagnetisches Ventil (2) nach einem der Ansprüche 1 bis 4,
**dadurch gekennzeichnet, dass** mindestens eine oder jede Aufnahme an einer Schubführung (66) angebracht ist und mindestens eine oder jede Schubführung (66) aus nichtmagnetischem Material besteht.

6. Elektromagnetisches Ventil (2) nach einem der Ansprüche 1 bis 5, **dadurch gekennzeichnet, dass** es mindestens einen oder zwei Verschlusshalterungen (56) umfasst, wobei jede Verschlusshalterung (56) so konfiguriert ist, dass sie ihren Verschluss während der Öffnungs- und Schließbewegungen der Verschlüsse in Bezug auf der zugehörigen Aufnahme zentriert;

7. Elektromagnetisches Ventil (2) nach einem der Ansprüche 1 bis 6, **dadurch gekennzeichnet, dass** es eine Magnetfeldquelle, insbesondere eine Spule (52), umfasst, wobei eine der Aufnahmen im Inneren der Magnetquelle (52) angeordnet ist, wobei der Durchgang durch die Magnetquelle (52) hindurchgehen kann.

8. Elektromagnetisches Ventil (2) nach einem der Ansprüche 1 bis 7, **dadurch gekennzeichnet, dass** es eine Kolbenfeder (68) umfasst, die den Kolben (54) in einer geschlossenen Konfiguration hält, in der einer der beiden Verschlüsse, genannt Einlassverschluss (46), geschlossen ist; und in der der andere der beiden Verschlüsse, genannt Auslassverschluss (50), offen ist.

9. Elektromagnetisches Ventil (2) nach einem der Ansprüche 1 bis 8, **dadurch gekennzeichnet, dass** es mindestens eine Verschlussfeder (48 ; 51) umfasst; vorzugsweise zwei Verschlussfedern (48 ; 51), die so konfiguriert sind, dass sie jeden Verschluss (46 ; 50) halten und in einer geschlossenen Position gegen die zugehörige Aufnahme verbunden sind.

10. Elektromagnetisches Ventil (2) nach einem der Ansprüche 1 bis 9, **dadurch gekennzeichnet, dass** der Durchgang (36) eine Öffnung (40), insbesondere eine dritte Öffnung (40), aufweist, die sich in einem Abstand von den durch den Durchgang (36) verbundenen Aufnahmen befindet.

11. Elektromagnetisches Ventil (2) nach einem der Ansprüche 1 bis 10, **dadurch gekennzeichnet, dass** mindestens ein oder jeder Verschluss (46 ; 50) eine Kugel (46 ; 50) ist, vorzugsweise mit einem Durchmesser von weniger als 4,00 mm, besser weniger als 2,00 mm.

12. Elektromagnetisches Ventil (2) nach einem der Ansprüche von 1 bis 11, **dadurch gekennzeichnet, dass** der Durchgang (36) ein Steuerdurchgang (36) ist und dass das Ventil (2) ferner eine Fluidverteilungsebene in Verbindung mit dem Steuerdurchgang (36) umfasst, wobei die Verteilungsebene (4) einen Verteilungsdurchgang (12), einen Verteilungseinlass (14) mit einer Aufnahme, einen Verteilungsauslass (16) mit einer Aufnahme und zwei Ventile (20 ; 22) umfasst, wobei die Verteilungseinlass-Aufnahme und die Verteilungsauslass-Aufnahme selektiv geöffnet und geschlossen werden können.

13. Elektromagnetisches Ventil (2) nach Anspruch 12, **dadurch gekennzeichnet, dass** die Verteilungsventile (20 ; 22) durch einen Verteilungskolben (26) gesteuert werden, der mit dem Steuerkanal (36) in Verbindung steht.

## Claims

1. Electromagnetic valve (2), especially for cryogenic fluids, the valve (2) comprising:
- two seats facing away from each other;
- two closure members (46 ; 50), each of which cooperates with one of the seats so as to be able to close and open said seat;
- a magnetic circuit with a magnetic plunger (54) capable of being driven by a magnetic field source (52), the plunger (54) displacing the closure members (46; 50) relative to their respective seat; the plunger (54) being placed between the closure members (46 ; 50) so that each closure member (46; 50) closes its seat by moving the plunger (54) away from said seat,
the electromagnetic valve (2) further comprising a passage (36) connecting the seats and the valve comprising tappets (58) cooperating with the closure members (46 ; 50), each tappet (58) being capable of displacing one of the closure members (46 ; 50) by passing through the associated seat,
**characterised in that** at least one or each tappet (58) is movably mounted relative to the plunger (54) so as to be retractable into the plunger (54), the plunger (54) preferably comprising at least one spring (62) configured to extend the tappets (58) out of the plunger (54).

2. Electromagnetic valve (2) according to claim 1, **characterised in that** at least one or each tappet (58) comprises a portion of lesser thickness cooperating with one of the closure members (46 ; 50),

3. Electromagnetic valve (2) according to any one of claims 1 and 2, **characterised in that** the plunger (54) comprises a passing through channel (55) configured to connect the seats of the passage (36).

4. Electromagnetic valve (2) according to any one of claims 1 to 3, **characterised in that** it comprises at least one tappet guide (66), preferably two tappet guides (66) disposed on both sides of the plunger (54).

5. Electromagnetic valve (2) according to any one of claims 1 to 4, **characterised in that** at least one or each seat is formed on a tappet guide (66), and at least one or each tappet guide (66) is made of non-magnetic material.

6. Electromagnetic valve (2) according to any one of claims to 1 to 5, **characterised in that** it comprises at least one or two closure member holders (56), each closure member holder (56) being configured to centre its closure member (46; 50) with respect to the associated seat during the opening and closing movements of the closure members (46 ; 50).

7. Electromagnetic valve (2) according to any one of claims 1 to 6, **characterised in that** it comprises a magnetic field source (52), in particular a coil (52), one of the seats being disposed inside the magnetic source (52), the passage possibly passing through said magnetic source (52).

8. Electromagnetic valve (2) according to one of the claims 1 to 7, **characterised in that** it comprises a plunger spring (68) maintaining the plunger (54) in a closed configuration where one of the two closure members, called the inlet closure member (46), is closed; and where the other of the two closure members, called the outlet closure member (50), is open.

9. Electromagnetic valve (2) according to any one of claims 1 to 8, **characterised in that** it comprises at least one closure member spring (48 ; 51), preferably two closure member springs (48 ; 51), configured to maintain each closure member (46; 50), associated in a closed position against the associated seat.

10. Electromagnetic valve (2) according to any one of claims 1 to 9, **characterised in that** the passage (36) comprises an opening (40), in particular a third opening (40), which is at a distance from the seats connected by the passage (36).

11. Electromagnetic valve (2) according to any one of claims 1 to 10, **characterised in that** at least one or each closure member (46 ; 50) is a ball (46 ; 50), preferably with a diameter less than 4.00 mm, more preferably less than 2.00 mm.

12. Electromagnetic valve (2) according to any one of claims 1 to 11, **characterised in that** the passage (36) is a pilot passage (36), and **in that** the valve (2) further comprises a fluid distribution level (4) in communication with the pilot passage (36), the distribution level (4) comprising a distribution passage (12), a distribution inlet (14) with a seat, a distribution outlet (16) with a seat, two flaps (20 ; 22) selectively opening and closing the distribution inlet seat and the distribution outlet seat.

13. Electromagnetic valve (2) according to claim 12, **characterised in that** the distribution flaps (20 ; 22) are controlled by a distribution piston (26) in communication with the pilot passage (36).
